# EUROPEAN PATENT APPLICATION

(11) **EP 1 860 299 A1**
(43) Date of publication of application: **28.11.2007**
(21) Application number: 07116473.5
(22) Date of filing: 10.01.2003
(51) Int. Cl.: F02B 37/007, F02B 37/16, F02B 37/18, F02B 37/24

(54) **Sealing means for a lubrication system in a turbocharger**

(62) Divisional of application: 03815122.1
(71) Applicant: Honeywell International, Inc., Morristown, New Jersey 07962 (US)
(72) Inventor: Mathieu, Philippe, 88150, Thaon-les-Vosges (FR); Figura, Giorgio, 88150, Thaon-les-Vosges (FR); Genin, Emeric, 88150, Thaon-les-Vosges (FR); Lavez, Alexis, 88150, Thaon-les-Vosges (FR)
(74) Representative: TBK-Patent

(57) **Abstract**

A multi-turbocharger boosting system for an internal combustion engine (603) comprises a first turbocharger (601) having a first exhaust gas driven turbine (605) and a first compressor (609) and a second turbocharger (602) having a second exhaust gas driven turbine (607) and a second compressor (611). A first valve (633) controls a mass flow of exhaust gas flowing towards each of the turbines (605, 607) and a second valve (639) controls a mass flow of compressed air flowing from each of the compressors (609, 611).

## Description

The invention relates to a turbocharger, preferably to a turbocharger for an internal combustion engine. The invention further relates to a multi-turbocharger boosting system.

According to document US 4,157,834 there is known a turbocharger with one or more conventional sealing portions each comprising a circumferential groove accommodating a sealing ring. Further sealing arrangements are disclosed in the documents EP-A1-1245793, EP-A2-1130220 and WO-A2-02086293.

The object of the invention is to provide an improved turbocharger and an improved multi-turbocharger boosting system.

According to an aspect of the invention the object is achieved by the combination of the features defined in each of the independent claims. Preferable embodiments of the invention are set forth in the subclaims.

According to an embodiment the turbocharger according to the invention comprises a compressor impeller connected by a shaft being rotatably supported in a bearing with a turbine wheel and at least one sealing arrangement with a sealing portion for avoiding leakage from the bearing to the space where one of the compressor impeller and the turbine wheel are located. The sealing arrangement comprises at least one pressure increasing means for increasing the pressure at a low pressure side of the sealing portion.

In a preferred embodiment the low pressure side of the sealing portion is the side being communicated with and/or facing the space where one of the compressor impeller and the turbine wheel are located.

Further, it is preferable to use a passage as pressure increasing means, which passage is communicated with air outside of the turbocharger or with the space where the turbine wheel is located.

It is further preferable to design the sealing portion as a circumferential groove accommodating a sealing ring and in particular to provide the groove in the shaft with the ring being abutted under pressure against one of the side walls of the groove and a radially opposite surface of an opening where the shaft is accommodated. To accomplish such an arrangement it is further preferable that both the sealing ring and the groove have a rectangular cross section, wherein the size and cross-section of the sealing ring are such that in the sealing position of the ring a radial and axial clearance between the high pressure side of the ring and the groove can be established.

According to a further embodiment the sealing arrangement comprises one or more additional sealing portions, wherein the pressure increasing means is provided between two adjacent sealing portions.

Alternatively the sealing arrangement comprises one or more additional sealing portions, wherein said pressure increasing means are communicated with the space where one of the compressor impeller and the turbine wheel are located, preferably adjacent to the sealing portion behind the compressor impeller or the turbine wheel, respectively. Here it is particularly preferable that the passage of the pressure increasing means merges into the opening in which the shaft is rotatably accommodated.

According to another aspect of the invention there is provided a multi-turbocharger boosting system comprising at least a first turbocharger and a second turbocharger, wherein at least the second turbocharger is a turbocharger according to one of the embodiments mentioned above. In a preferred embodiment of the multi-turbocharger boosting system the pressure increasing means of the second turbocharger are communicated with the compressor output and/or the turbine input of the first turbocharger.

According to a still further aspect of the invention there is provided a turbocharger with a turbine side actuating mechanism for actuating a device within the turbocharger housing from outside the turbocharger housing, said mechanism comprising a rod which is rotatably mounted in the turbocharger housing for transmitting an actuating movement from outside the turbocharger housing to the device, wherein the rod is provided with a sealing portion for avoiding gas leakage. In a preferred embodiment the device is a variable nozzle device comprising an unison ring for actuating vanes forming nozzle passages and the actuating mechanism is a linkage mechanism comprising the rod being coupled at one end to a link arm coupled to the unison ring and the other end coupled to external adjusting means, wherein the sealing portion is formed as explained above with regard to the first aspect of the invention.

In the following the invention with its function, effects and advantages will be explained by embodiments as examples with reference to the enclosed drawings in which
Figure 1 shows a cross-sectional view of a first embodiment of the turbocharger according to the invention;
Figures 2 and 3 show enlarged views of the seal portion of the turbocharger in Fig. 1 at the compressor and turbine side thereof, respectively;
Figure 4 illustrates a layout of a multi-turbocharger boosting system in which a turbocharger according to the invention is incorporated;
Figure 5 shows a cross-sectional view of a second embodiment of the turbocharger according to the invention;
Figures 6 and 7 show enlarged views of the seal portion of the turbocharger in Fig. 5 at the compressor and turbine side thereof, respectively;
Figure 8 shows a cross-sectional view of a third embodiment of the turbocharger according to the invention;
Figure 9 shows an enlarged cross-sectional view of the third embodiment of the turbocharger where a cartridge accommodating a variable nozzle device is used;
Figure 10 shows an enlarged cross-sectional view of a fourth embodiment of the turbocharger according to the invention;
Figure 11 shows an enlarged cross-sectional view of an actuation mechanism according to the invention; and
Figure 12 shows an enlarged cross-sectional view of the sealing portion of the actuation mechanism in Fig. 11.

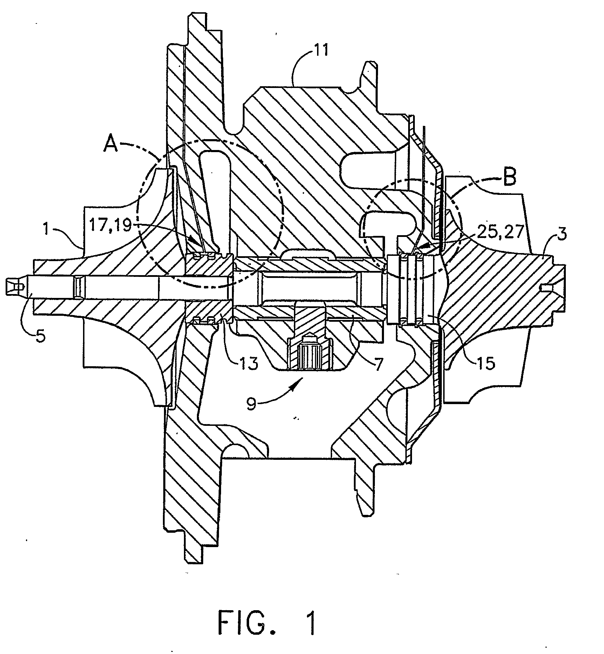

The essential parts of a turbocharger according to a first embodiment of the invention are illustrated in Fig. 1 where details of the turbocharger housing and the particular construction of the turbocharger parts are not shown in detail. The turbocharger comprises a compressor impeller 1 and a turbine wheel 3 mounted on the opposite ends of a common shaft 5. The shaft 5 is freely rotatable in a bearing 7 provided with an oil supplying system 9 the arrangement of which is not particularly shown in Fig. 1. The bearing 7 is supported in a center housing 11. On both ends of the shaft 5, just behind the impeller 1 and the turbine wheel 3, there are provided two seal portions 13 and 15, respectively, for avoiding that oil from the bearing 7 leaks out from the space encompassed by the center housing 11. In this embodiment the seal portion 15 at the turbine wheel side is formed as an enlarged portion of the shaft 5, whereas the seal portion and the impeller side of the shaft is formed as a seal sleeve or oil slinger 13.

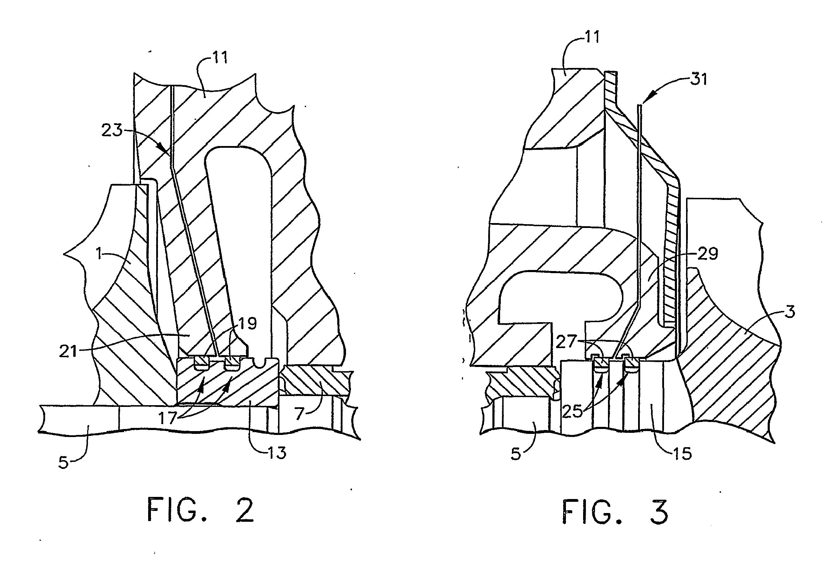

As particularly shown in Fig. 2 in the outer circumferential surface of the oil slinger 13 there are provided two circumferential grooves 17 in which seal rings 19 are accommodated for providing a leak-tight seal between the oil slinger 13 and a collar portion 21 of the center housing 11. In the collar portion 21 there is provided at least one ventilation passage 23 which merges between the seal rings 19 into a central shaft opening formed by the collar portion 21 in order to communicate this opening with the air outside the turbocharger.

As further shown in Fig. 3 the extended diameter portion of the shaft 5 is also provided with a twin-groove arrangement similar to the described above, where in grooves 25 there are accommodated seal rings 27. A turbine side collar portion 29 of the center housing 11 forms a central opening encompassing the large diameter seal portion 15 of the shaft 5 and is in abutment with the seal or piston rings 27. The portion of the central shaft opening extending between the seal rings 27 is communicated with the air outside the turbocharger by means of a ventilation passage 31 which extends within the turbine side collar portion 29.

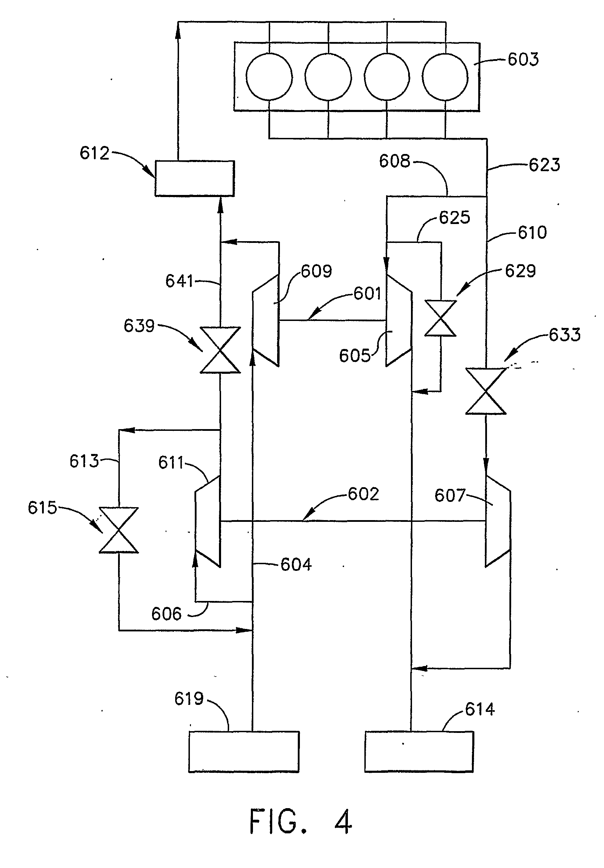

Both the above described oil seal system at the impeller side shown in Fig. 2 and the oil seal system at the turbine side shown in Fig. 3, prevent the oil supplied to the bearing 7 from leaking to the space where the impeller is arranged and thus contaminating the intake air of the combustion engine. Such situation occurs at low compressor speeds and mostly during operation modes in which there is almost no rotation of the compressor. Therefore, it is particularly advantageous to use a turbocharger having the above-described oil sealing system in a multi-turbocharger boosting system shown in Fig. 4.

The system comprises a first turbocharger 601 and a second turbocharger 602, wherein the two turbochargers are connected generally parallel in relation to an internal combustion engine 603. The first turbocharger 601 comprises preferably a free floating turbine 605 at its turbine side, whereas the second turbocharger 602 is equipped with a variable geometry turbine 607. The turbines 605 and 607 and respective compressors 609 and 611 are connected in parallel. According to the layout fresh air is fed in parallel to each of the compressors by means of a first fresh air conduit 604 and second fresh air conduit 606 and the air discharged from the compressors is guided through an intercooler 612 to the intake side of the internal combustion engine 603. At the turbine side of the layout the exhaust from the engine 603 is fed through a first exhaust conduit 608 and a second exhaust conduit 610 branching from a conduit or piping 623 to the first and second turbine 605 and 607, respectively, and the exhaust discharged from the parallel turbines is guided to a catalyst 614.

In the multi-turbocharger boosting system shown in Fig. 4 the second compressor 611 is provided with an air re-circulation system using air flow regulating means for adjusting the amount of the re-circulated air. The re-circulation system in this embodiment includes a by-pass conduit 613 with a butterfly valve 615 for adjusting the air mass-flow re-circulated back into the second fresh air conduit 606 connecting the inlet of the second compressor 611 with an air filter 619.

The multi-turbocharger boosting system further comprises an additional butterfly valve 639 being arranged in the conduit 641 connecting the second compressor 611 with the intercooler 612 between the merging point of the by-pass conduit 613 downstream of the second compressor 611 and the merging point of the first compressor 609 in the conduit 641.

At the turbine side of the multi-turbocharger boosting system there is provided a bypass passage 625 with a_corresponding waste gate valve 629. A butterfly or throttle valve 633 is arranged in the second exhaust conduit 610.

The multi-turbocharger boosting system according to Fig. 4 allows a highly efficient function of the internal combustion engine at low, medium and high rotational speeds of the internal combustion engine.

At a low rotational speed of the internal combustion engine 103, which means at about 1000-2000 rpm, the exhaust gas supplied through the exhaust conduit or piping 623 drives the free floating turbine 605 of the first turbocharger 601. The butterfly valve 633 is closed or nearly closed to reduce exhaust gas flow into turbine 607 to ensure an idling rotation of the second turbocharger 602 so as merely to avoid oil leakage from the bearing system thereof. Under this condition the speed of the first turbocharger is controlled by means of the waste gate valve 629. At this stage the first turbocharger works normally to supercharge the engine 603.

At the low rotational speed, the butterfly valve 615 is open so that a re-circulation at the second compressor 611 is achieved. Due to the particular design of the layout, during the re-circulation the pressure in the second compressor 602 can be lowered so that the trust load becomes less important and the reliability is improved.
The additional butterfly valve 639 remains closed and the first compressor 609 works normally to supercharge the engine 603.

In the range of a medium rotational speed of the internal combustion engine, which means at about 2000-2500 rpm, the butterfly or throttle valve 633 opens progressively so as to regulate the pressure before the turbine and the exhaust gas flow drives the second turbocharger 602. In the same time the butterfly valve 615 is progressively closed in order to balance the power between the second compressor 611 and the second turbine, so that by operation of the butterfly valve 615 the speed of the second turbocharger 602 can be regulated.

In the range of a high rotational speed of the internal combustion engine, which means at about 2500 - 4000 rpm, the butterfly valve 633 is completely or almost completely open, wherein the speed of the turbine 605 is regulated by means of the waste gate valve 629. During this operation the additional butterfly valve 639 is open and the butterfly valve 615 is totally closed.

In the above-mentioned mode of operation at a low rotational speed, the butterfly valve 633 can be closed or nearly closed without causing thereby an oil leakage. Although the pressure behind the impeller 1 of turbocharger 602 becomes quite low, the pressure drop at the outer piston ring 19 is decreased by ventilating the space between the outer and inner piston rings by air at normal atmosphere pressure. The further seal ring 19 positioned between the ventilation passage 23 and the bearing 7 is also subject to reduced pressure drop so that an oil leakage to the impeller side of the turbocharger can be efficiently avoided even if the rotation of the second turbocharger is stopped.

The ventilation passage 31 arranged at the turbine side as shown in Fig. 3 has almost the same function as the ventilation passage 23 at the impeller side of the turbocharger. At low rotational speed of the internal combustion engine, there is also a significant drop in pressure in the space around and behind the turbine wheel 3.

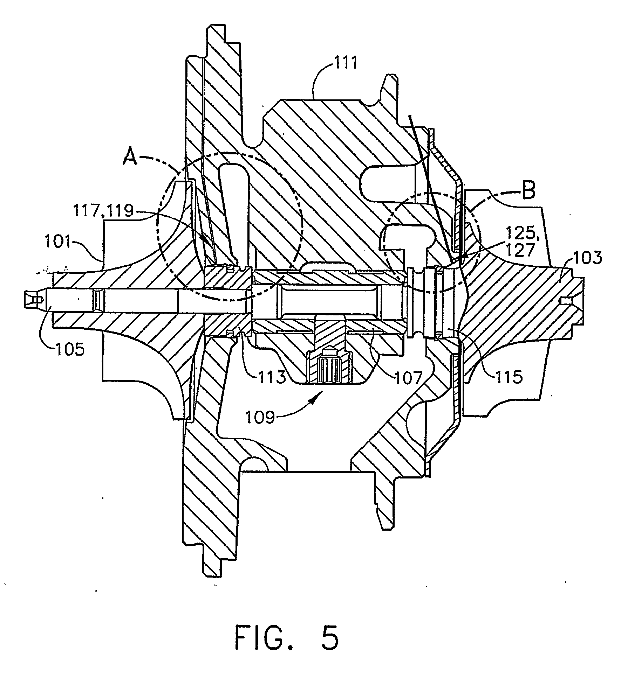

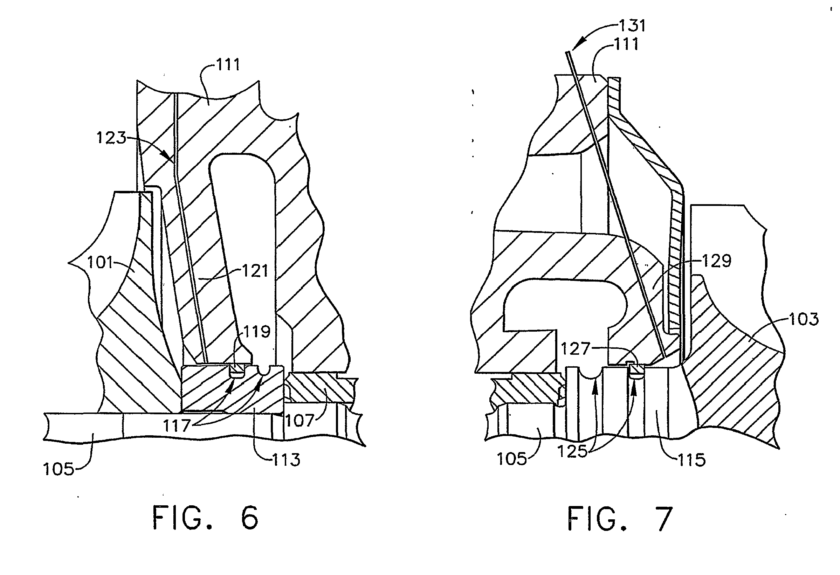

According to the second embodiment shown in Figs. 5, 6 and 7 the outer seal arrangement consisting of a seal or piston ring and a groove can be omitted, whereas the merging point of the ventilation passage is to be arranged close to a single piston ring at the corresponding groove. As illustrated by Fig. 6 the collar portion 121 of the center housing 111 is formed with an invertly sloped surface, wherein the merging point of the ventilation passage 123 is arranged at the radially invert almost lowest part of the sloped surface in close proximity to the seal arrangement 117, 119.
However the merging point of the ventilation passage can be also directly arranged in the center opening of the collar portion 121, so that the clearance of the fit between the shaft and the center opening in the portion between the merging point and the compressor space serves as throttling means.

As shown in Fig. 7 almost the same design as the design shown in Fig. 6 is adopted for the turbine side of the turbocharger where a ventilation passage 131 communicates the space behind the turbine wheel being closest to the seal arrangement 125, 127 with the air outside the turbocharger.

With regard to the second embodiment shown in Figs. 5 to 7, in this embodiment the same design of the oil slinger 113 and the enlarged seal portion 115 of the shaft 105 as in the first embodiment is used. This means that although these elements keep the above-described twin-groove design only the respective collar portions 121 and 129 are designed such that the central openings thereof face only one seal arrangement consisting of one groove and one seal ring.

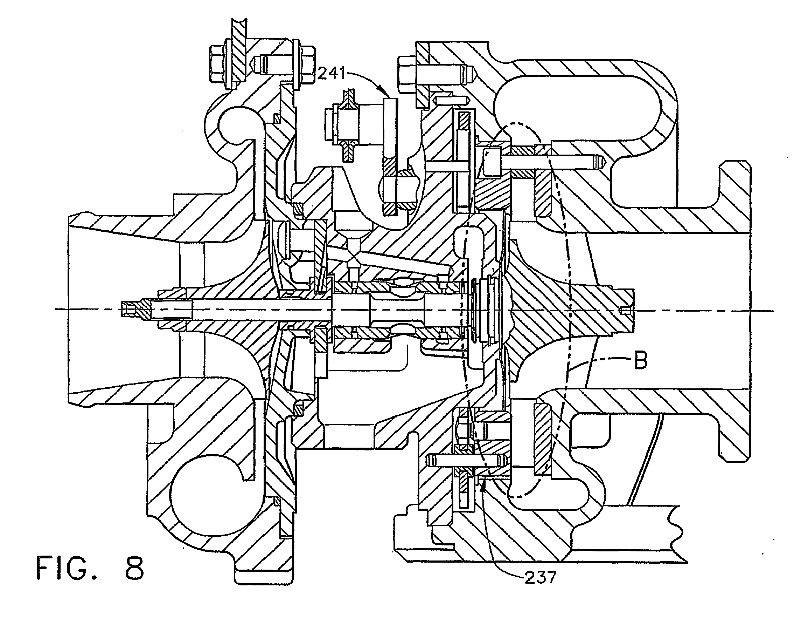

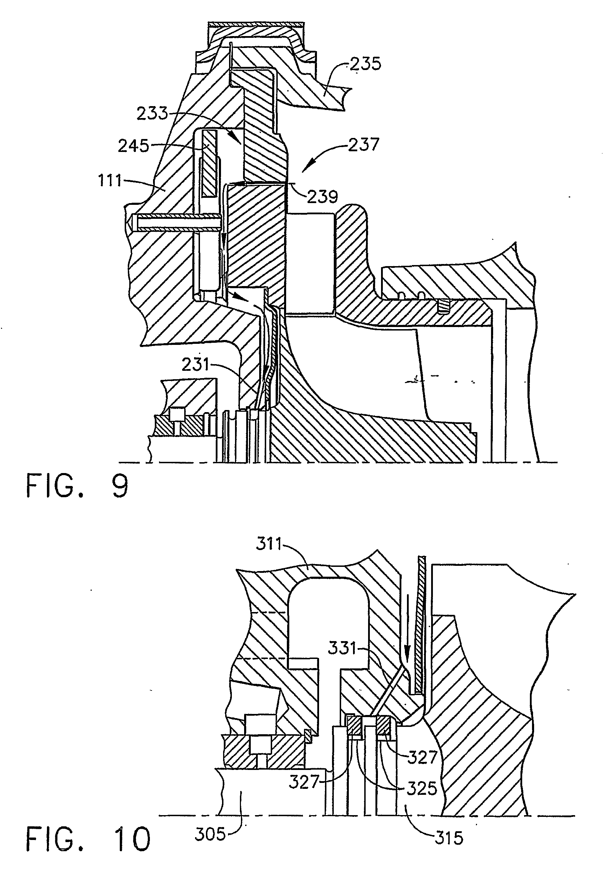

According to a third embodiment of the invention shown in Figs. 8, 9 and 10 a variable geometry nozzle device is designed and arranged in such a way between the center housing 111 and a turbine housing 235 that there is provided at least one gas passage 237 which communicates the exhaust gas inlet side of the turbine with the ventilation passage 231 as shown in Figs. 9 and 10 representing arrangements of the ventilation passage at the turbine side similar to the second and first embodiment, respectively.

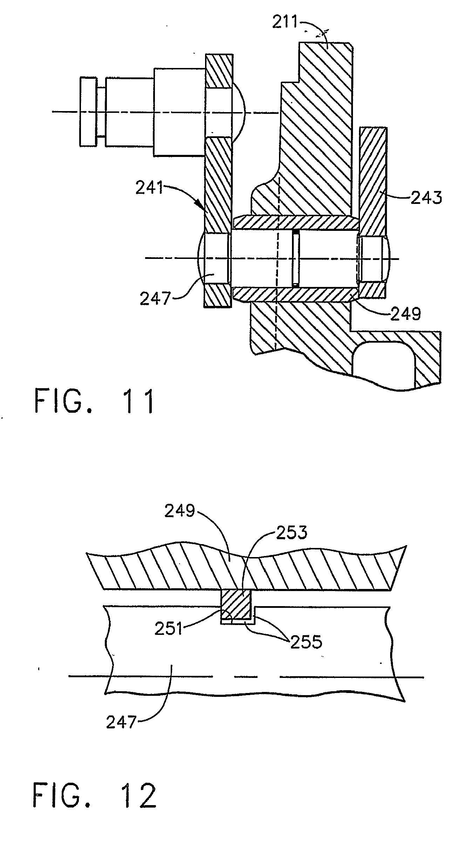

According to a further embodiment of the invention shown in Fig. 11 and 12 there is provided a particular construction of an actuation device 241 comprising a lever for circumferentially shifting the unison ring 245 of the variable nozzle device shown in Fig. 9. In this embodiment an actuating shaft 247 of the actuation device is rotatably supported in a bushing 249 interposed in the center housing 211. Between the actuating shaft or crank pin 247 and the bushing 249 there is provided a seal arrangement consisting of a circumferential groove 251 and a seal ring 253. The seal ring 253 has elastic properties which allows each to be stocked into the bushing internal face as is the case with the seal rings described above. As can be understood from the illustration in Fig. 12 the seal ring has a substantially rectangular cross-section with two adjacent sealing surfaces abutting against the bushing 249 and the crank pin 247. For this purpose the axial thickness of the seal ring 253 is smaller than the axial width of the groove 251, whereas the inner diameter of the seal ring 253 exceeds the diameter of the bottom portion of the groove 251, such that an L-shaped clearance 255 shown in Fig. 12 is established when the seal ring is exposed to the exhaust gas pressure from the right side in Fig. 12.

The above construction of the actuation device 241 can be applied in each of the third and fourth embodiment shown in Figs. 9 and 10.

Furthermore the sealing portion described above with reference to Figures 11 and 12 is also preferably applicable in each of the embodiments described above with reference to Figures 1 to 10.

## Claims

1. A multi-turbocharger boosting system for an internal combustion engine (603) comprising a first turbocharger (601) having a first exhaust gas driven turbine (605) and a first compressor (609) and a second turbocharger (602) having a second exhaust gas driven turbine (607) and a second compressor (611), wherein the first and second turbines and the first and second compressors are respectively connected in parallel,
further comprising a first valve (633) at an inlet of the second turbine (607) and a second valve (639) at an outlet of the second compressor (611), and a compressed air recirculation passage (613) connected to the inlet of the second compressor (611);
wherein the first valve (633) controls a mass flow of exhaust gas flowing towards each of the turbines (605, 607);
wherein the second valve (639) controls mass flow of compressed air flowing from the second compressor (611).

2. The multi-turbocharger boosting system according to claim 1, wherein the compressed air recirculation passage (613) is provided with a recirculation valve (615) for controlling the flow through the compressed air recirculation passage.

3. The multi-turbocharger boosting system according to one of claims 1-2, further comprising an exhaust gas bypass passage (625) connecting the inlet of the first turbine (605) with the outlet thereof.

4. The multi-turbocharger boosting system according to claim 3, wherein the exhaust gas bypass passage (625) is provided with a bypass valve (629) for controlling the flow through the exhaust gas bypass passage (625).

5. The multi-turbocharger boosting system according to one of claims 2-4, wherein in a range of a low rotational speed of the internal combustion engine, the second valve (639) is closed and the recirculation valve (615) is open.

6. The multi-turbocharger boosting system according to one of claims 4-5, wherein in a range of a low rotational speed of the internal combustion engine, the first valve (633) is closed or nearly closed and the bypass valve (629) is employed to control the speed of the first turbine (605).

7. The multi-turbocharger boosting system according to one of claims 2-4, wherein in a range of a high rotational speed of the internal combustion engine, the second valve (639) is open and the recirculation valve (615) is closed.

8. The multi-turbocharger boosting system according to one of claims 4-5, wherein in a range of a high rotational speed of the internal combustion engine, the first valve (633) is open and the bypass valve (629) is employed to control the speed of the first turbine (605).

9. The multi-turbocharger boosting system according to one of the preceding claims, wherein the first turbine (605) is a free floating turbine.

10. The multi-turbocharger boosting system according to one of the preceding claims, wherein and the second turbine (607) is a variable geometry turbine.

11. The multi-turbocharger boosting system according to one of the preceding claims, wherein the valves (633, 639, 615, 629) are formed as butterfly valves and/or throttle valves.
